(19) Europäisches Patentamt
European Patent Office
Office européen des brevets

(11) Publication number: **0 489 973 A1**

# (12) EUROPEAN PATENT APPLICATION

(21) Application number: **90203240.8**

(51) Int. Cl.⁵: **G03C 1/83**, C09B 23/02

(22) Date of filing: **10.12.90**

(43) Date of publication of application:
**17.06.92 Bulletin 92/25**

(84) Designated Contracting States:
**AT BE CH DE DK ES FR GB GR IT LI LU NL SE**

(71) Applicant: **AGFA-GEVAERT naamloze vennootschap**
**Septestraat 27**
**B-2640 Mortsel(BE)**

(72) Inventor: **Callant, Paul Remi**
**Renaat De Rudderlaan 9**
**B-2650 Edegem(BE)**
Inventor: **Kiekens, Eric Gilbert**
**Landbouwstraat 2**
**B-3010 Kessel-Lo(BE)**
Inventor: **Van den Zegel, Marc Emiel**
**Felix Timmermansstraat 9**
**B-3191 Boortmeerbeek(BE)**

## (54) Photographic element comprising a filter dye.

(57) A photographic element comprising a support and at least one photo-sensitive silver halide emulsion layer and at least one dye dispersed in a hydrophilic water-permeable colloid binder, wherein said dye corresponds to the following general formula :

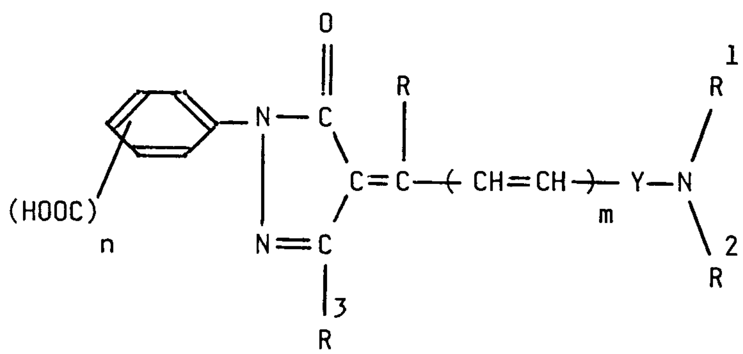

wherein :
R represents hydrogen, an alkyl group including a substituted alkyl group, each of $R^1$ and $R^2$ independently represents an alkyl group including a substituted alkyl group, or an aryl group including a substituted aryl group, or they represent together the necessary atoms to close a heterocyclic ring, $R^3$ represents an alkyl group including a substituted alkyl group, an alkoxycarbonyl group, a cyano group or a carbamoyl group including a substituted carbamoyl group,
Y represents a thienylene group,
n is zero, 1 or 2, and
m is zero or 1, with the proviso that the compound within the scope of the above general formula contains at least one -COOH group.

EP 0 489 973 A1

1. Field of the Invention

The present invention relates to filter dyes and their use in photographic elements.

2. Background of the Invention

Filter dyes are widely used in photographic elements, particularly in photographic elements of the silver halide type. They may be used in a photosensitive silver halide emulsion layer as acutance dye, in an undercoat adjacent to the photosensitive layer and/or in a backing layer on the side of the support opposite the photosensitive layer to absorb reflected and scattered light thereby serving as antihalation dye or in an overcoat or interlayer to shield a particular photosensitive layer against undesired exposure being therefore referred to as absorber dye.

For example in order to improve image sharpness an absorber dye can be present in one or more filter layers between silver halide emulsion layers that are coated at opposite sides of a transparent film support of an X-ray recording material. The imagewise exposure of said recording material proceeds in a cassette between a pair of X-ray intensifying screens that each are held in contact with an adjacent silver halide emulsion layer. By said arrangement the imaging light that would cross the support and to some extent becomes scattered thereby, is considerably attenuated and cannot give rise to an unsharp image in an opposite silver halide emulsion layer.

On the one hand it is very important that filter dyes remain, i.e. that they are non-migratory, in the layer wherein they have been incorporated especially when this layer is in direct contact with the silver halide emulsion layer in order to prevent a desensitizing action on the silver halide. On the other hand the filter dyes may not stain the photographic material after image processing. Therefore preference is given to filter dyes that decolorize or can be removed from the photographic element in the processing stage.

As described in US-P 3,560,214 dyes comprising a carboxyl and phenyl substituted pyrazoline nucleus linked through a methine group to a dialkylaminophenyl group can be removed relatively easily in alkaline aqueous processing liquids but lack sufficient fastness to diffusion in hydrophilic colloid layers.

Other filter dyes characterized by the presence of a 2-pyrazolin-5-one nucleus substituted with a carboxyphenyl group and including a methine group or chain linked to a dialkylamino group are described in US-P 4,857,446. The decolorization of said filter dyes proceeds very rapidly in alkaline aqueous processing baths but especially the monomethine dyes have an absorption spectrum of which the maximum is in the shorter wavelength range of the visible spectrum so that normally a second filter dye is needed to block or absorb green light.

3. Summary of the Invention

It is an object of the present invention to provide new filter dyes having an absorption maximum that is bathochromically shifted with regard to the above prior art dyes and that can be incorporated in non-migratory state in hydrophilic colloid layers of photographic silver halide emulsion materials wherefrom they can be removed rapidly in alkaline aqueous liquids used in the processing of said materials.

In accordance with the present invention a dye is provided that corresponds to the following general formula :

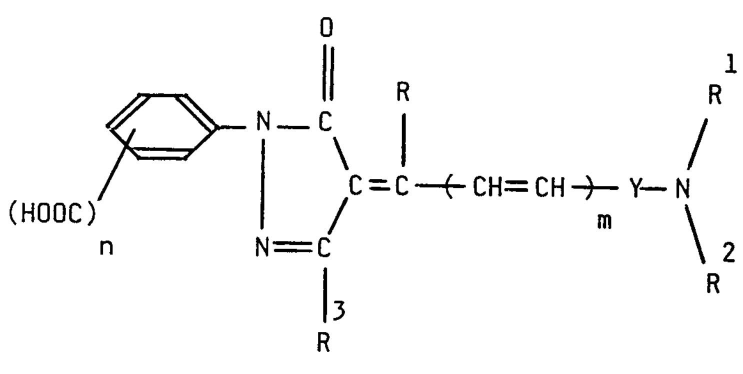

wherein :

R represents hydrogen, an alkyl group including a substituted alkyl group, e.g. methyl or benzyl,

each of $R^1$ and $R^2$ independently represents an alkyl group including a substituted alkyl group, e.g. a $-CH_2-COOH$ group, or an aryl group including a substituted aryl group, or they represent together the necessary atoms to close a heterocyclic ring, e.g. a N-piperidino or N-morpholino ring,

$R^3$ represents an alkyl group including a substituted alkyl group, an alkoxycarbonyl group, a cyano group or a carbamoyl group including a substituted carbamoyl group,

Y represents a thienylene group,

n is zero, 1 or 2, and

m is zero or 1,

with the proviso that the compound within the scope of the above general formula contains at least one -COOH group.

Further in accordance with the present invention a photographic element is provided comprising a support and at least one a photo-sensitive silver halide emulsion layer and at least one filter dye according to the above general formula in dispersed form in a hydrophilic water-permeable colloid binder.

4. Detailed description of the Invention

The presence of (a) carboxyl-group(s) in the filter dye is important to provide sufficient non-migratory character to the above filter dye at coating pH's in the range of 4 to 8 but sufficient solublity in aqueous alkaline medium. In the acid pH range the filter dyes according to the present invention can be incorporated in aqueous coating compositions in dispersed form by using commercial mixing devices for making colloidal dispersions.

At a pH of at least 10 said filter dyes are easily solubilized so they are removed almost completely from a hydrophilic waterpermeable colloid layer of a photographic silver halide emulsion material by its common alkaline aqueous liquid processing and leave almost no residual stain. The presence of sulfite contributes to a more rapid discolouration of the filter dyes.

The broadened and bathochromically shifted absorption band of said filter dyes is particularly useful for blocking light in the green spectral range (500-600 nm).

Because of said spectral property the present filter dyes are used advantageously between silver halide emulsion layers of double-side emulsion coated (duplitized) photographic film material applied in X-ray recording in a cassette between green light emitting X-ray conversion phosphor screens. By said arrangement the green light that would cross the support and to some extent becomes scattered thereby, is considerably attenuated and cannot give rise to an unsharp image in an opposite silver halide emulsion layer.

Green light emitting phosphor screens and their use in combination with green sensitive silver halide emulsion layers of a double side coated (duplitized) film are described e.g. in US-P 4,130,428, wherein also several measures, e.g. the use of filter dyes, to reduce cross-over light have been described.

According to another embodiment said dyes are used in an antihalation layer of a photographic silver halide emulsion material in order to improve image sharpness by absorbing exposure light penetrating the emulsion layer(s) into the direction of the support. The use of said mainly green light absorbing dyes in an antihalation layer is particularly advantageous in silver halide emulsion materials that are made spectrally sensitive to green light and of which the exposure proceeds with a green light emitting laser e.g. argon ion laser the main power of which is emitted at 488 and 514 nm.

Preparations 1 to 4 relate to the synthesis of the filter dyes of the following Table 1. In Table 1 said dyes are listed with their absorption maximum ($\lambda$-max) and their molar extinction coefficient $\epsilon$ at $\lambda$-max. These data have been determined with the dyes dissolved in methanol containing a few drops of triethylamine. The intermediates used in the preparations are defined by structural formula and a reference with regard to their preparation is given following the preparations of the filter dyes. By Pn the position of one or more HOOC-groups on the indicated phenyl nucleus is given.

Table 1

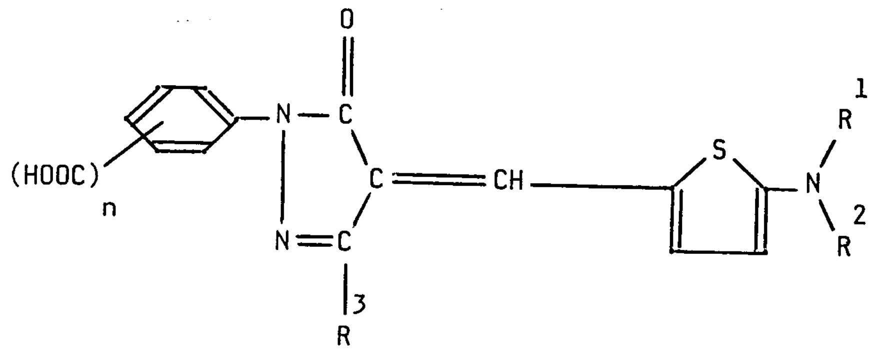

| Dye No. | Pn | $R^1$ | $R^2$ | $R^3$ | n | λ-max nm | $\varepsilon .10^{-4}$ |
|---|---|---|---|---|---|---|---|
| 1 | 4 | 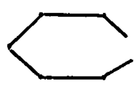 | | $CH_3$ | 1 | 483 | 6.6 |
| 2 | 4 | 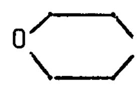 | | $COOC_2H_5$ | 1 | 470 | 7.9 |
| 3 | 4 | 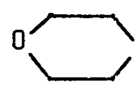 | | $CH_3$ | 1 | 496 | 5.8 |
| 4 | 4 | $C_2H_5$ | $C_2H_5$ | $CH_3$ | 1 | 501 | 6.8 |

PREPARATION 1

To a suspension of intermediate 2 (19.7 g, 0.1 mol) and intermediate 4 (21.8 g, 0.1 mol) in 250 ml of toluene a catalytic amount (425 mg) of piperidine acetate were added. The mixture was refluxed for 3 h. The product was isolated by filtration from the hot reaction mixture. Dye 1 was purified by slurrying it twice in hot toluene and once in hot ethanol and isolating the solid by filtration while hot. Yield : 34.2 g (86 %).

Melting point : > 250 °C. The NMR and mass spectra were consistent with the structure assigned.

PREPARATION 2

To a suspension of intermediate 1 (39.4 g, 0.2 mol) and intermediate 5 (55.2 g, 0.2 mol) in 400 ml of toluene a catalytic amount (0.9 g) of piperidine acetate were added. The mixture was refluxed for 3 h. The product was isolated by filtration from the hot reaction mixture. After slurrying it twice in hot toluene, isolating the solid by filtration while hot, dye 2 was further purified by chromatography on silicagel [eluent : $CH_2Cl_2/NH_4OH/CN_3OH$ (76/4/20 by volume)]. The desired fractions were concentrated and upon adding water and acetic acid dye 2 was isolated. Yield : 35.5 g (39 %).

Melting point : > 250 °C (dec.). The NMR and mass spectra were consistent with the structure assigned.

PREPARATION 3

To a suspension of intermediate 1 (22.4 g, 0.12 mol) and intermediate 4 (25 g, 0.12 mol) in 450 ml of methanol was added triethyl amine (15.9 ml, 0.12 mol). This mixture was refluxed for 90 min. After cooling 10 ml of acetic acid was added. The product was isolated by filtration and purified by silicagel chromatography [eluent : $CH_2Cl_2/NH_4OH/CH_3OH$ (70/6/24 by volume)]. The desired fractions were concentrated and triturated with diluted hydrochloric acid (23 g, 50%). Yield : 23 g (50 %).

Melting point : 225 °C (dec.). The NMR and mass spectra were consistent with the structure assigned.

PREPARATION 4

To a suspension of intermediate 3 (14.6 g, 87.5 mmol) and intermediate 4 (17.4 g, 87.5 mmol) in 80 ml of methanol was added 12.5 ml of triethyl amine. After refluxing this mixture for 3 h, the solvent was evaporated (in vacuo) and the redbrown residue was chromatographed on silicagel [eluent : $CH_2Cl_2/NH_4ON/CH_3OH$ (78/2/20 by volume)]. The desired fractions were concentrated and upon adding water and acetic acid dye 4 was isolated as a red powder. Yield : 11.9 g (35 %).

Melting point : > 250 °C (dec.). The NMR and mass spectra were consistent with the structure assigned.

Structural formulae of the intermediates

| No. | | Reference No. |
|---|---|---|
| 1 | 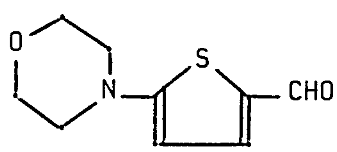 | 1, 2 |
| 2 | 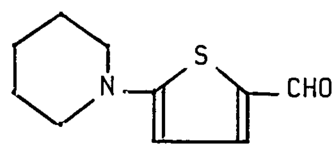 | 1, 2 |
| 3 | 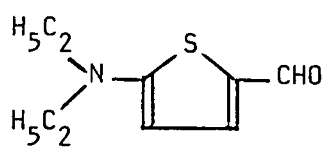 | 1, 2 |

| | | |
|---|---|---|
| 4 | 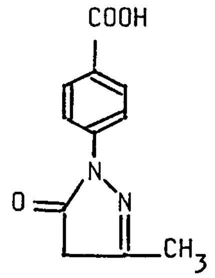 | 3 |
| 5 | 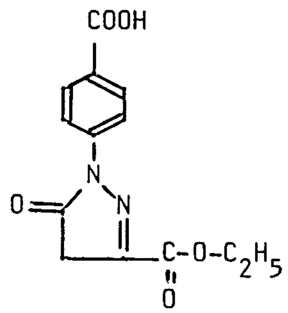 | ++ |

1. Hartman, H. Scheithauer S., J. Prakt. Chem., 1969, 311 (5), 827-843.
2. Shulezko, A., Ukr. Khim. Zh., 1972, 38 (1), 68-70.
3. Michaelis A., Ann. 373, 214 (1910).

++ Prepared in analogy with the method applied in reference no. 3.

The filter dyes according to the present invention are preferably used in the form of a solid particle dispersion for incorporation into a hydrophilic colloid layer of a wet processable photographic silver halide emulsion layer material. They can be present in any layer of the photographic material where it is desirable to include a filter dye, e.g. in the silver halide emulsion layer as screening dye or in a separate filter or antihalation layer. They can be used in black-and-white as well as in colour photographic materials.

The filter dyes according to the present invention can be utilized in any amount to filter or absorb light but it is particularly advantageous to utilize them in an amount and in a location so that they will be solubilized and washed out during processing in aqueous alkaline processing liquids applied in the development and/or fixing treatment of an imagewise exposed silver halide emulsion layer material. Useful covering of dye for filter purposes is in the range of 10 to 5000 $mg/m^2$.

The filter dyes according to the present invention can be dispersed in aqueous acid or neutral medium e.g. by use of mechanical or ultra-sonic mixing devices, e.g. colloid mill, optionally using a wetting or dispersing agent. According to a particular embodiment an organic solvent is used wherefrom the filter dyes are precipitated in finely divided form in aqueous medium. Another way to bring said filter dyes in dispersed form is by first dissolving them in a so-called "oil-former" whereupon an oil-in-water type emulsion is formed. Oil-formers are highly boiling non-watermiscible organic liquids that can dissolve the present filter dyes. Still another way to bring the filter dyes in non-migratory dispersed state is by adhering them to polymer latex particles as described e.g. in Research Disclosure, Item 19551, July, 1980.

The photosensitive silver halide used in conjunction with filter dyes according to the present invention may comprise silver chloride, silver bromide, silver bromoiodide, silver chlorobromoiodide and the like, or mixtures thereof. The silver halide may be of any morphological crystal type, e.g. of octahedral, cubic or tabular shape (ref. Maskasky, J. E. - J. Imaging Sci., 30, 247-254 and 31, 15-26 and 93-99).

The silver halide emulsions may be coarse or fine grain and can be prepared by any of the well known procedures, e.g., single jet emulsions, double jet emulsions, such as Lippmann emulsions, ammoniacal emulsions, thiocyanate- or thioether-ripened emulsions such as those described in U.S. Patent Specifications 2,222,264 of Adolph H. Nietz and Frederick J. Russell, issued November 19, 1940, 3,320,069 of Bernard D. Illingsworth, issued May 16, 1967, and 3,271,157 of Clarence E. McBride, issued September 6, 1966. Surface image emulsions may be used or internal image emulsions may be used such as those described in U.S. Patent Specifications 2,592,250 of Edward Philip Davey and Edward Bowes Knott, issued April 8, 1952, 3,206,313 of Henry D. Porter, Thomas H. James and Wesley G. Lowe, issued September 14, 1965, and 3,447,927 of Robert E. Bacon and Jean F.Barbier, issued June 3, 1969. The emulsions may be regular-grain emulsions such as the type described by Klein and Moisar in J. Photogr. Sci., Vol. 12, No. 5,

Sept./Oct. 1964, pp. 242-251. If desired, mixtures of surface and internal image emulsions may be used as described in U.S. Patent Specification 2,996,382 of George W. Luckey and John C. Hoppe, issued August 15, 1961.

Apart from negative working silver halide emulsions that are preferred for their high light sensitivity, direct positive silver halide emulsions may be used that produce a positive silver image. For example those direct positive silver halide emulsions are considered wherein by exposure or by a chemical treatment a developable fog has been produced, which is destroyed imagewise during the imagewise exposure when certain conditions are fulfilled. In the unexposed areas the fog is maintained so that during the subsequent development a direct positive silver image is obtained.

For example, direct positive emulsions of the type described in P.J.Hillson, U.S. Patent 3,062,651, may be utilized to obtain direct positive images. In emulsions of this type, a non-hardening fogging agent such as stannous chloride, formamidine sulfinic acid, or the like is used.

More details about composition, preparation and coating of silver halide emulsions are described, e.g., in Product Licensing Index, Vol. 92, December 1971, publication 9232, p. 107-109 and Research Discl. Nov. (1989) No. 307105, p. 863-885.

The emulsions can be chemically sensitized, e.g. by adding as chemical sensitizers sulphur-containing compounds, e.g. allyl isothiocyanate, allyl thiourea, sodium thiosulphate and the like, during the chemical ripening stage. Likewise or in addition thereto reducing agents may be used as chemical sensitizing agents, e.g. the tin compounds described in the Belgian Patent Specifications 493,464 and 568,687, and polyamines such as diethylenetriamine or derivatives of aminomethane-sulphonic acid, e.g. according to the Belgian Patent Specification 547,323. Other suitable chemical sensitizers are noble metals and noble metal compounds such as gold, platinum, palladium, iridium, ruthenium and rhodium. This method of chemical sensitization has been described in the article of R.KOSLOWSKY, Z. Wiss. Photogr. Photophys. Photochem. 46, 65-72 (1951).

Further it is possible to sensitize the emulsions with polyalkylene oxide derivatives, e.g. with polyethylene oxide having a molecular weight between 1000 and 20,000, or with condensation products of alkylene oxides and aliphatic alcohols, glycols, cyclic dehydration products of hexitols, alkylsubstituted phenols, aliphatic carboxylic acids, aliphatic amines, aliphatic diamines and amides. The condensation products have a molecular weight of at least 700, preferably of more than 1000. For obtaining special effects these sensitizers of course can be combined with each other as described in Belgian Patent Specification 537,278 filed April 12, 1955 and UK Patent Specification 727,982.

The spectral photosensitivity of the silver halide has to comply with the spectral composition of the exposure light used in the exposure. For a proper spectral sensitization the usual mono- or polymethine dyes such as acidic or basic cyanines, hemicyanines, oxonols, hemioxonols, styryl dyes or others, also tri- or polynuclear methine dyes, e.g. rhodacyanines or neocyanines may be used. Such spectral sensitizers are described, e.g., by F.M.HAMER in "The Cyanine Dyes and Related Compounds" (1964) Interscience Publishers, John Wiley & Sons, New York.

The silver halide emulsions may contain the usual stabilizers or anti-foggants, e.g. homopolar or salt-like compounds of mercury with aromatic or heterocyclic rings such as mercaptotriazoles, simple mercury salts, sulphonium mercury double salts and other mercury compounds. Other suitable stabilizers are azaindenes, preferably tetra- or penta-azaindenes, especially those substituted with hydroxyl or amino groups. Compounds of this kind are described by BIRR in Z. Wiss. Photogr. Photophys. Photochem. 47,, 2-27 (1952). Still other suitable stabilizers acting as anti-foggants are amongst others heterocyclic mercapto compounds, e.g. phenylmercaptotetrazole, quaternary benzothiazole derivatives, benzotriazole and 5-nitro-benzimidazole.

In the processing of imagewise photo-exposed silver halide emulsion materials containing a latent image the development of the image takes place with a suitable developing agent acting as reducing agent and operating in aqueous alkaline medium.

Processing to form a visible and fixed silver image and/or colour image produced in conjunction therewith can be of any type known in the art, e.g. as described in "Research Disclosure" Sections XIX-XXIV of December 1978, item 17643.

Examples of suitable developing agents for black-and-white imaging are : 1,4-dihydroxy benzene compounds such as hydroquinone, chlorohydroquinone, bromohydroquinone, toluhydroquinone, morpholinemethyl hydroquinone, sulfohydroquinone and 3-pyrazolidinone type developing agents, e.g. 1-phenyl-3-pyrazolidinone,
1-phenyl-4,4-dimethyl-3-pyrazolidinone, and
1-phenyl-4-methyl-4'-hydroxymethyl-3-pyrazolidinone and/or
N-methyl-p-aminophenol sulphate.

Colour development usually proceeds with a p-phenylene diamine type developing agent in the

presence of colour couplers known to those skilled in the art. Chromogenic development with colour couplers is followed by bleaching of the silver image and fixing.

Silver bleaching liquids generally comprise in alkaline medium a dissolved oxidizing agent, e.g. iron (III) complex compound, watersoluble persulfate and the like.

Fixing liquids comprise compounds that form soluble silver salts by reaction with remaining silver halide. Common examples of fixing agents are compounds providing thiosulfate ions, e.g. sodium thiosulfate or ammonium thiosulfate, or provide thiocyanate ions as e.g. potassium thiocyanate.

The photographic formation of dye images controlled by silver halide development may proceed by a dye diffusion transfer process several embodiments of which are described by Christian C. Van de Sande in Angew. Chem. Int. Ed. Engl. 22, (1983), p. 191-209.

Usually the developing agent is incorporated in an aqueous alkaline processing liquid. When incorporated in the silver halide emulsion layer, and/or in a non-silver halide containing layer adjacent thereto the development can be obtained by treating the photo-exposed silver halide emulsion layer material with an alkaline aqueous "activator liquid" originally free from developing agent.

Typical activator liquids used in the development of photographic silver halide emulsion materials comprise, for example, an aqueous solution of an alkaline material, such as sodium carbonate, sodium hydroxide, potassium carbonate, potassium hydroxide, mixtures of sodium hydroxide and sodium sulfite, hydroxyalkylamines, e.g. triethanolamine, etc. A suitable activator bath comprises e.g. about 2 percent by weight of sodium hydroxide and 0.5 percent by weight of sodium sulfite.

Preferably the alkaline developing liquid or activator liquid has a pH of at least 8, preferably of at least 10 in order to ensure rapid removal of the filter dyes according to the present invention from the photographic silver halide emulsion material. Following processing the present filter dyes should contribute preferably no more than an optical density of 0.1 at the maximum of their absorption spectrum, and more preferably should remain with a density less than 0.01 which means that the processed material is practically free from stain.

The following comparative example illustrates the present invention. All parts, ratios and percentages are by weight unless otherwise indicated.

COMPARATIVE EXAMPLE

From each of the dyes exemplified in the above Table 1 a dispersion in aqueous gelatin solution was made and likewise for comparative purposes dye dispersions of prior art dyes described in US-P 4,857,446 (Dyes 1 and 4 of Table 1 described therein) were made.

- Procedure for the preparation of the filter dye dispersion

20 g of filter dye were dispersed at 40 °C in 200 g of a 10 % aqueous gelatin solution by using a rotating pearl mill containing as milling material zirconium oxide pearls sizing 0.6 to 0.8 µm. At a dye particle size of about 1 µm the milling process was stopped and the dispersion separated from the milling material.

- Coating procedure

Chromium(III) acetate as hardening agent and additional gelatin were added to the above prepared dye dispersion kept at a temperature of 36 °C and pH 6.1.

Said dispersion was double-side coated and dried onto a polyethylene terephthalate film support in order to obtain at each side a dye coverage of 0.25 g/$m^2$, a gelatin coverage of 1 g/$m^2$ and coverage of hardening agent of 0.016 g/$m^2$.

In Table 2 the wavelength of maximal absorption (λ-max) of the coated materials is given together with the half band width (HBW) values of their absorption expressed in nm, their density (D) measured at λ-max and at 540 nm, the latter being the main emission wavelength of a $Gd_2O_2S$:Tb phosphor used in X-ray intensifying screens.

Table 2

| Invention Dye No. | λ-max nm | HBW nm | D at λ-max | D at 540 nm |
|---|---|---|---|---|
| 1 | 490 | 202 | 0.86 | 0.67 |
| 4 | 544 | 112 | 1.10 | 1.09 |
| Comparison Dye No. | | | | |
| 1 | 444 | 176 | 1.28 | 0.54 |
| 2 | 432 | 148 | 0.65 | 0.25 |

Comparison dyes 1 and 2 are repectively dyes 1 and 4 of Table 1 of US-P 4,857,446.

- Processing procedure

In order to assess the resistance to diffusion of dye in the coated layer the coating of each dye was given a 5 minutes rinse with distilled water at 20 °C. The spectral density (D) at wavelength of maximum absorption (D at λ-max) of the double-side coated material before and after that treatment was measured. The same measurements were effected before and after a 90 seconds processing in a AGFA CURIX (trade name) type 402 processor, within a developing time of 27 s at 35 °C, fixing time of 18 s, rinsing time of 28 s and drying time of 17 s.

The developer used had the following composition :

| | |
|---|---|
| Hydroquinone | 30 g/l |
| Potassium sulphite | 64 g/l |
| 1-Phenyl-3-pyrazolidinone | 1.5 g/l |
| Potassium bromide | 4 g/l |
| Glutardialdehyde | 4.7 g/l |
| pH = 10.10 with bicarbonate/carbonate buffer | |

The fixer used had the following composition :

| | |
|---|---|
| Ammonium thiosulphate | 132 g/l |
| Sodium sulphite | 10.8 g/l |
| Aluminium sulphate | 5.4 g/l |
| pH : 4.3 with acetic acid/acetate buffer | |

The obtained optical densities are resumed in Table 3

Table 3

Density at λ-max

| Invention Dye No. | Before water rinse | After water rinse | After processing |
|---|---|---|---|
| 1 | 0.86 | 0.83 | 0.01 |
| 4 | 1.10 | 1.13 | 0.01 |
| Comparison Dye No. | | | |
| 1 | 1.28 | 1.28 | 0.01 |
| 2 | 0.65 | 0.68 | 0.01 |

Comparison dyes 1 and 2 are repectively dyes 1 and 4 of Table 1 of US-P 4,857,446.

The change in spectral density (D) at λ-max before and after rinsing with water is a measure for the fastness to diffusion of the filter dye.

The spectral density (D) at λ-max after processing is a measure for the residual stain. The lower that spectral density the more readily the filter dye is decolourized in the alkaline developer liquid.

## Claims

**1.** A photographic element comprising a support and at least one photo-sensitive silver halide emulsion layer and at least one dye dispersed in a hydrophilic water-permeable colloid binder, wherein said dye corresponds to the following general formula :

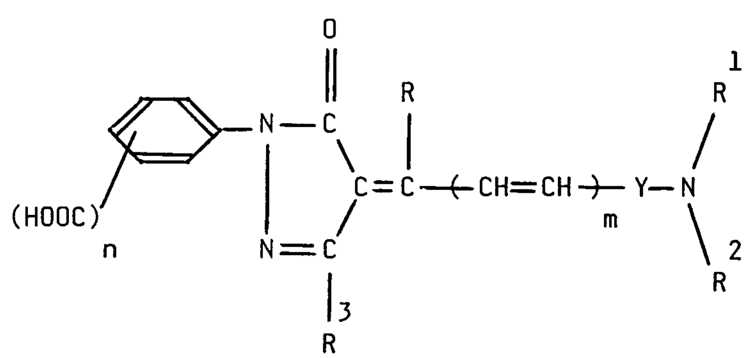

wherein :

R represents hydrogen, an alkyl group including a substituted alkyl group, each of $R^1$ and $R^2$ independently represents an alkyl group including a substituted alkyl group, or an aryl group including a substituted aryl group, or they represent together the necessary atoms to close a heterocyclic ring, $R^3$ represents an alkyl group including a substituted alkyl group, an alkoxycarbonyl group, a cyano group or a carbamoyl group including a substituted carbamoyl group,

Y represents a thienylene group,

n is zero, 1 or 2, and

m is zero or 1,

with the proviso that the compound within the scope of the above general formula contains at least one

-COOH group.

2. A photographic element according to claim 1, wherein said dye(s) is (are) used in an amount and in a location so that it will be solubilized and washed out during processing in aqueous alkaline processing liquids applied in the development and/or fixing treatment of an imagewise exposed silver halide emulsion layer material.

3. A photographic element according to claim 1 or 2, wherein said dye is applied for filter purposes in the range of 10 to 5000 mg/$m^2$.

4. A photographic element according to any of claims 1 to 3, wherein at least one of said dyes is present in an antihalation layer coated between said support and a silver halide emulsion layer(s) or at the side of said support opposite to that carrying the silver halide emulsion layer(s).

5. A photographic element according to any of claims 1 to 3, wherein said element comprises a support coated at both sides with a silver halide emulsion layer and carrying between the support and each said emulsion layer a filter layer comprising said dye(s).

6. A photographic element according to any of the preceding claims, wherein in said structural formula R represents hydrogen,
each of $R^1$ and $R^2$ represents methyl or ethyl or together represent the necessary atoms to close a N-piperidino or N-morpholino ring,
n is 1 or 2, and
m is zero.

7. A dye corresponding to the following general formula :

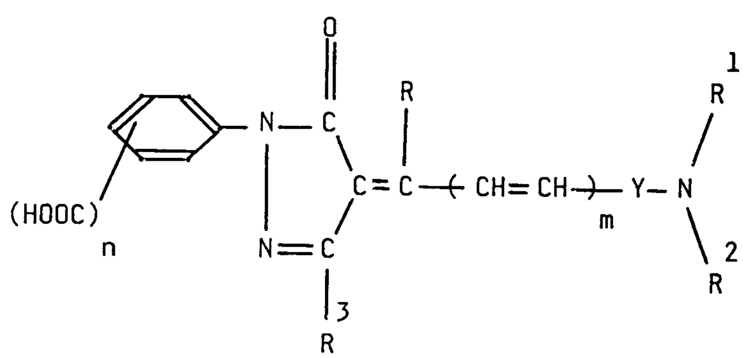

wherein :
R represents hydrogen, an alkyl group including a substituted alkyl group, each of $R^1$ and $R^2$ independently represents an alkyl group including a substituted alkyl group, or an aryl group including a substituted aryl group, or they represent together the necessary atoms to close a heterocyclic ring,
$R^3$ represents an alkyl group including a substituted alkyl group, an alkoxycarbonyl group, a cyano group or a carbamoyl group including a substituted carbamoyl group,
Y represents a thienylene group,
n is zero, 1 or 2, and
m is zero or 1, with the proviso that the compound within the scope of the above general formula contains at least one -COOH group.

European Patent Office

# EUROPEAN SEARCH REPORT

Application Number

EP 90 20 3240

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3627532 (H.DEPOORTER ET AL)<br>*Column 3, Compound 8*<br>--- | 1-7 | G03C1/83<br>C09B23/02 |
| A | CHEMICAL ABSTRACTS, vol. 80, no. 16, 22 April 1974<br>Columbus, Ohio, USA<br>MIKHAILENKO ET AL: "Diheteroarylmethinium salts.Heterocyclic analogs of Michelers Hydrol Blue"<br>page 83; column 2; ref. no. 84680J<br>* abstract *<br>--- | 1-7 | |
| D,A | WO-A-8804794 (EASTMAN KODAK CO.)<br>*Page 15,Table VIII*<br>----- | | |

| TECHNICAL FIELDS SEARCHED (Int. Cl.5 ) |
|---|
| G03C<br>C09B |

The present search report has been drawn up for all claims

| Place of search | Date of completion of the search | Examiner |
|---|---|---|
| THE HAGUE | 31 JULY 1991 | BOLGER W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)